# EUROPEAN PATENT APPLICATION

(11) **EP 4 761 447 A1**
(43) Date of publication of application: **17.06.2026**
(21) Application number: 23948694.7
(22) Date of filing: 11.08.2023
(51) Int. Cl.: H04W 74/00

(54) **PRACH TRANSMISSION METHOD AND APPARATUS, AND PRACH RECEPTION METHOD AND APPARATUS**

(71) Applicant: 1FINITY Inc., Kawasaki-shi, Kanagawa 211-8588 (JP)
(72) Inventor: TIAN, Yan, Beijing 100022 (CN); JIANG, Qinyan, Beijing 100022 (CN); ZHANG, Lei, Beijing 100022 (CN)
(74) Representative: Haseltine Lake Kempner LLP
(86) International application number: PCT/CN2023/112498
(87) International publication number: WO 2025/035249

(57) **Abstract**

The embodiments of the present application provide a PRACH transmission method and an apparatus therefor, and a PRACH reception method and an apparatus therefor. The method includes: a terminal equipment determines a second number of PRACH occasions (ROs) related to a time period, wherein the time period is a first number of association pattern periods of synchronization signal blocks (SSBs) and PRACH occasions (ROs) (i.e., SSB-to-RO association pattern periods); and the terminal equipment repeatedly transmits a preamble on the second number of ROs.

## Description

### TECHNICAL

Embodiments of the present application relate to the field of communications technologies.

### BACKGROUND

In order to enhance uplink coverage of a network device (e.g., a base station), NR Rel-18 makes study on enhancing a power of transmitting a Physical Random Access Channel (PRACH) by a terminal equipment (UE) using multiple PRACH transmissions, so that the network device can receive the PRACH transmitted by the terminal equipment in a range with weak coverage capability, thereby improving a coverage of an initial access channel and ensuring that a terminal equipment at an edge of a cell can access the cell, thereby improving the coverage capability of the system.

For a PRACH resource configuration scheme, relevant PRACH resource information may be configured in system information, including rach-ConfigCommon and additionalRACH-ConfigList-r17. The network device configures PRACH resource information such as frequency domain resources of the PRACH, PRACH configuration index, and the like via radio resource control (RRC) signaling. The terminal equipment can obtain time-frequency resource related information such as PRACH occasion (RO) by looking up a table according to the PRACH configuration index or the like.

It should be noted that, the above introduction to the background is merely for the convenience of clear and complete description of the technical solution of the present application, and for the convenience of understanding of persons skilled in the art. It cannot be regarded that the above technical solution is commonly known to persons skilled in the art just because that the solution has been set forth in the background of the present application.

### SUMMARY

The inventor finds that when a terminal equipment performs a PRACH transmission, it needs to map a synchronization signal block (SSB) to a RO. For a single PRACH transmission, an SSB-to-RO association period (also abbreviated as an association period) and an SSB-to-RO association pattern period (also abbreviated as an association pattern period) can be used.

However, for multiple PRACH transmissions, a preamble is to be repeatedly transmit on at least multiple ROs in a time domain. Therefore, within the current time period, it is not guaranteed that the number of ROs with the same SSB index mapped in the time domain is greater than or equal to the repetition number of multiple PRACH transmissions. Accordingly, the time period for the multiple PRACH transmissions is to be determined.

To address at least one of the above problems, embodiments of the present application provide a PRACH transmission method and an apparatus therefor, and a PRACH reception method and an apparatus therefor.

According to an aspect of embodiments of the present application, there is provided with a PRACH transmission method, including:
a terminal equipment determines a second number of PRACH occasions (ROs) related to a time period, wherein the time period is a first number of association pattern periods of synchronization signal blocks (SSBs) and ROs (SSB-to-RO association pattern periods); and
the terminal equipment repeatedly transmits a preamble on the second number of ROs.

According to another aspect of the embodiments of the present application, there is provided with a PRACH transmission apparatus configured in a terminal equipment, including:
a processing unit configured to determine a second number of PRACH occasions (ROs) related to a time period, wherein the time period is a first number of association pattern periods of synchronization signal blocks (SSBs) and ROs (SSB-to-RO association pattern periods); and
a transmitting unit configured to repeatedly transmit a preamble on the second number of ROs.

According to another aspect of the embodiments of the present application, there is provided with a PRACH reception method, including:
a network device receives a preamble that is repeatedly transmitted by a terminal equipment on a second number of PRACH occasions (ROs),
wherein the terminal equipment determines the second number of ROs related to a time period, the time period being a first number of association pattern periods of synchronization signal blocks (SSBs) and ROs (SSB-to-RO association pattern periods).

According to another aspect of the embodiments of the present application, there is provided with a PRACH reception apparatus configured in a network device, including:
a receiving unit configured to receive a preamble that is repeatedly transmitted by a terminal equipment on a second number of PRACH occasions (ROs),
wherein the terminal equipment determines the second number of ROs related to a time period, the time period being a first number of association pattern periods of synchronization signal blocks (SSBs) and ROs (SSB-to-RO association pattern periods).

According to another aspect of the embodiments of the present application, there is provided with a communication system, including:
a terminal equipment configured to determine a second number of PRACH occasions (ROs) related to a time period, wherein the time period is a first number of association pattern periods of synchronization signal blocks (SSBs) and ROs (SSB-to-RO association pattern periods); and
a network device configured to receive a preamble that is repeatedly transmitted by the terminal equipment on the second number of ROs.

One of the beneficial effects of the embodiments of the present application is that: through the terminal equipment determining the second number of ROs related to a time period, the time period being a first number of association pattern periods of SSBs and ROs, the terminal equipment may quickly obtain RO resources for multiple PRACH transmissions and ensure that all SSBs in the multiple PRACH transmissions are mapped to the ROs, thereby improving the coverage capability of the system.

With reference to the specification and drawings below, specific embodiments of the present application are disclosed in detail, which specifies the manner in which the principle of the present application can be adopted. It should be understood that, the scope of the embodiments of the present application is not limited. Within the scope of the spirit and clause of the appended claims, the embodiments of the present application include many variations, modifications and equivalents.

The features described and/or shown for one embodiment can be used in one or more other embodiments in the same or similar manner, can be combined with the features in other embodiments or replace the features in other embodiments.

It should be emphasized that, the term "include/comprise" refers to, when being used in the text, existence of features, parts, steps or assemblies, without exclusion of existence or attachment of one or more other features, parts, steps or assemblies.

### BRIEF DESCRIPTION OF THE DRAWINGS

Elements and features described in one of the drawings or embodiments of the present application may be combined with the elements and features shown in one or more other drawings or embodiments. Moreover, in the drawings, similar reference signs indicate corresponding parts in several drawings and may be used to indicate corresponding parts used in more than one embodiment.
FIG. 1 is a schematic diagram of a communication system in an embodiment of the present application;
FIG. 2 is a schematic diagram of a PRACH transmission method in an embodiment of the present application;
FIG. 3 is an example diagram of an association pattern period in an embodiment of the present application;
FIG. 4 is another example diagram of an association pattern period in an embodiment of the present application;
FIG. 5 is another example diagram of an association pattern period in an embodiment of the present application;
FIG. 6 is another example diagram of an association pattern period in an embodiment of the present application;
FIG. 7 is another example diagram of an association pattern period in an embodiment of the present application;
FIG. 8 is another example diagram of an association pattern period in an embodiment of the present application;
FIG. 9 is another example diagram of an association pattern period in an embodiment of the present application;
FIG. 10 is another example diagram of an association pattern period in an embodiment of the present application;
FIG. 11 is another example diagram of an association pattern period in an embodiment of the present application;
FIG. 12 is another example diagram of an association pattern period in an embodiment of the present application;
FIG. 13 is another example diagram of an association pattern period in an embodiment of the present application;
FIG. 14 is another example diagram of an association pattern period in an embodiment of the present application;
FIG. 15 is another example diagram of an association pattern period in an embodiment of the present application;
FIG. 16 is another example diagram of an association pattern period in an embodiment of the present application;
FIG. 17 is an example diagram of a PRACH configuration in an embodiment of the present application;
FIG. 18 is a schematic diagram of a PRACH reception method in an embodiment of the present application;
FIG. 19 is a schematic diagram of a PRACH transmission apparatus in an embodiment of the present application;
FIG. 20 is a schematic diagram of a PRACH reception apparatus in an embodiment of the present application;
FIG. 21 is a schematic diagram of a network device in an embodiment of the present application; and
FIG. 22 is a schematic diagram of a terminal equipment in an embodiment of the present application.

### DETAILED DESCRIPTION

With reference to the drawings, the foregoing and other features of the present application will become apparent through the following specification. The specification and the accompanying drawings specifically disclose the particular embodiment of the present application, showing part of the embodiment in which the principle of the present application can be adopted, it should be understood that the present application is not limited to the described embodiment, on the contrary, the present application includes all modifications, variations and equivalents that fall within the scope of the appended claims.

In embodiments of the present application, the terms "first", "second", etc., are used to distinguish different elements by their appellation, but do not indicate the spatial arrangement or chronological order of these elements, etc., and these elements shall not be limited by the terms. The term "and/or" includes any and all combinations of one or more of the terms listed in association with the term. The terms "contain", "include", "have", etc., refer to the presence of the stated feature, element, component or assembly, but do not exclude the presence or addition of one or more other features, elements, components or assemblies.

In embodiments of the present application, the singular forms "one", "the", etc., including the plural forms, shall be broadly understood as "a sort of" or "a kind of" and not limited to the meaning of "one"; furthermore, the term "said" shall be understood to include both the singular form and the plural form, unless it is expressly indicated otherwise in the context. In addition, the term "according to" should be understood to mean "at least partially according to ...", and the term "based on" should be understood to mean "based at least partially on ...", unless it is expressly indicated otherwise in the context.

In embodiments of the present application, the term "communications network" or "wireless communications network" may refer to a network that complies with any of the following communication standards, such as Long Term Evolution (LTE), Enhanced Long Term Evolution (LTE-A), Wideband Code Division Multiple Access (WCDMA), High-Speed Packet Access (HSPA), etc.

In addition, the communication between the devices in the communication system can be carried out according to the communication protocol of any stage, for example, including but not being limited to 1G (generation), 2G, 2.5G, 2.75G, 3G, 4G, 4.5G and 5G, New Radio (NR), future 6G, etc., and/or other communication protocols currently known or to be developed in the future.

In embodiments of the present application, the term "network device" refers to, for example, a device in the communication system that connects a terminal equipment to the communication network and provides services to the terminal equipment. The network device may include but is not limited to: a base station (BS), an access point (AP), a transmission reception point (TRP), a broadcast transmitter, a mobile management entity (MME), a gateway, a server, a radio network controller (RNC), a base station controller (BSC), etc.

The base station may include, but is not limited to, a node B (NodeB or NB), an evolution node B (eNodeB or eNB), 5G base station (gNB), an IAB donor, etc., and may also include a remote radio head (RRH), a remote radio unit (RRU), a relay, or a low-power node (such as femto, pico, etc.). And the term "base station" may include some or all of their functions, with each base station providing communication coverage to a specific geographic area. The term "cell" can refer to a base station and/or its coverage area, depending on the context in which the term is used.

In embodiments of the present application, the term "user equipment" (UE) or "terminal equipment or terminal device" (TE) refers, for example, to a device that is connected to the communication network through the network device and receives network services. The terminal equipment can be fixed or movable, and can also be called a mobile station (MS), a terminal, a subscriber station (SS), an access terminal (AT), a station, etc.

The terminal equipment may include but is not limited to: a cellular phone, a personal digital assistant (PDA), a wireless modems, a wireless communication device, a handheld device, a machine-type communication device, a laptop computer, a cordless phone, a smart phone, a smart watch, a digital camera, etc.

For another example, in scenarios such as Internet of Things (IoT), the terminal equipment may also be a machine or an apparatus that performs monitoring or measurement, and may include, but is not limited to, a machine type communication (MTC) terminal, a vehicle communication terminal, a device to device (D2D) terminal, a machine to machine (M2M) terminal, etc.

In addition, the term "network side" or "network device side" refers to the side of the network, which may be a base station or may include one or more network devices as described above. The term "user side" or "terminal side" or "terminal equipment side" refers to the side of the user or terminal, which may be a UE or may include one or more terminal equipments as described above. Without specifically indicated, "device" can refer to a network device or a terminal equipment.

Hereinafter the scenarios of in the embodiments of the present application are illustrated by examples, but which is not limited in the present application.

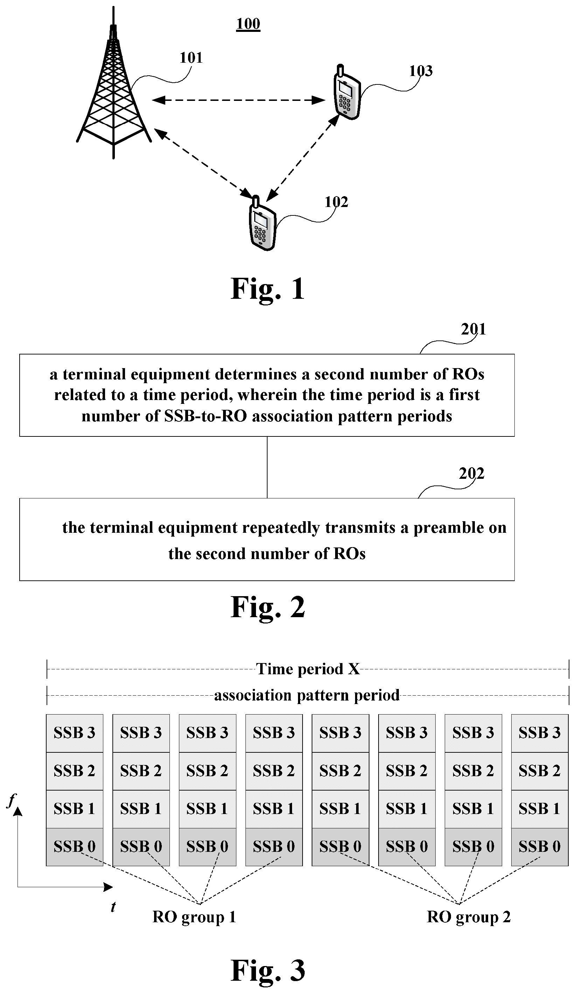

FIG. 1 is a schematic diagram of a communication system in an embodiment of the present application, illustrating a case of the terminal equipment and the network device as examples. As shown in FIG. 1, a communication system 100 may include a network device 101 and terminal equipments 102 and 103. For simplicity, FIG. 1 illustrates only two terminal equipments and one network device as examples, but which is not limited in the embodiments of the present application.

In embodiments of the present application, existing services or services that can be implemented in the future may be transmitted between the network device 101 and the terminal equipments 102, 103. For example, these services may include, but are not limited to, enhanced Mobile Broadband (eMBB), massive Machine Type Communication (mMTC), and Ultra-Reliable and Low-Latency Communication (URLLC), etc.

It is worth noting that FIG. 1 shows that two terminal equipments 102 and 103 are within the coverage of the network equipment 101, but which is not limited in the present application. Both of the two terminal equipments 102 and 103 may not be within the coverage of the network device 101, or one terminal equipment 102 is within the coverage of the network device 101 and the other terminal equipment 103 is outside the coverage of the network device 101.

In embodiments of the present application, a high-level signaling may be, for example, Radio Resource Control (RRC) signaling; for example, it is called an RRC message, e.g., including MIB, system information, and a dedicated RRC message; or it is referred to as RRC information element (RRC IE). For example, the high-level signaling may also be Medium Access Control (MAC) signaling; or is also called MAC control element (MAC CE). However, the present application is not limited to this.

For PRACH transmission, in order to facilitate the terminal equipment to quickly obtain time-domain resources that may transmit PRACH, a time-domain pattern of SSB-RO mapping for transmitting PRACH may be predetermined and repeated in the time domain. According to a configuration of RO (PRACH occasion), a PRACH configuration period for transmitting PARCH may be obtained.

However, since one PRACH configuration period may conflict with a SSB or a downlink channel, some RO resources may be dropped, and it may not be possible to map all SSBs completely, therefore, for single PRACH transmission, an SSB-to-RO association period is defined to ensure that all SSB indexes are mapped at least once. However, an SSB-RO mapping pattern formed according to the SSB-to-RO association period does not necessarily guarantee repeatability in the time domain, and thus an SSB-RO association pattern period is defined.

For multiple PRACH transmissions, a time-domain repetitive pattern of SSB-RO mapping that may transmit multiple PRACH transmissions is to be determined, so that the terminal equipment may quickly obtain the RO resources for multiple PRACH transmissions.

However, the multiple PRACH transmissions requires repeated transmission of a preamble on at least multiple ROs in the time domain. The association pattern period defined for the single PRACH transmission may not necessarily guarantee that the number of ROs with the same SSB index mapped in the time domain is greater than or equal to the repetition number of multiple PRACH transmissions. Therefore, for the multiple PRACH transmissions using legacy SSB-RO mapping, the period (or time length) of the SSB-RO mapping pattern that may be repeated is further to be determined.

In the following explanation, without causing confusion, the terms "PRACH" and "physical random access channel" or "random access information" are used interchangeably, the terms "PDCCH" and "physical downlink control channel" or "downlink control information" are used interchangeably, and the terms "PDSCH" and "physical downlink data channel" or "downlink data" are also used interchangeably.

In addition, transmitting or receiving a PRACH may be understood as transmitting or receiving random access information carried by the PRACH; transmitting or receiving a PDCCH may be understood as transmitting or receiving downlink control information carried by the PDCCH; and transmitting or receiving PDSCH may be understood as transmitting or receiving downlink data carried by the PDSCH. A preamble may be referred to as a random access preamble or a PRACH preamble.

### Embodiments of First Aspect

The embodiments of the present application provide a PRACH transmission method, which are explained from a terminal equipment side. FIG. 2 is a schematic diagram of a PRACH transmission method in an embodiment of the present application. As shown in FIG. 2, the method includes:
201: a terminal equipment determines a second number of PRACH occasions (ROs) related to a time period, wherein the time period is a first number of association pattern periods of synchronization signal blocks (SSBs) and PRACH occasions (ROs) (SSB-to-RO association pattern periods); and
202: the terminal equipment repeatedly transmits a preamble on the second number of ROs.

It is worth noting that FIG. 2 above only schematically illustrates the embodiment of the present application, but the present application is not limited to this. For example, the order of execution between operations can be adjusted appropriately, and some other operations can be added or one or more operations may be removed. Those skilled in the art may make appropriate variations in accordance with the above contents, and which is not limited to the disclosure of FIG. 2 above.

In some embodiments, the time period X is, for example, in a unit of milliseconds (ms). The second number N is the repetition number of the PRACH transmission, where N is a positive integer greater than 1; the terminal equipment repeatedly transmits the preamble on N ROs, i.e., transmits the same preamble on N ROs. For example, N ROs on which the same preamble is transmitted may be referred to as an RO group, that is, one RO group includes N ROs, where N is the repetition number of the PRACH transmission.

The PRACH transmission in the embodiments of the present application may be referred to as multiple PRACH transmissions, but is not limited to this, and for example, other terms such as MSG 1 repetition, PRACH repetition, multiple MSG1 transmissions, etc. may also be used. In addition, the repetition number may also be referred to as the number of multiple PRACH transmissions.

In some embodiments, the time period is determined based on a valid PRACH occasion (RO) configured by separate configuration of ROs and/or common configuration of ROs.

For example, a PRACH resource configured by *rach-ConfigCommon-r17* in *AdditionalRACH-Config-r17* is a configuration of PRACH occasions. The PRACH resource configured by *rach-ConfigCommon-r17* in *AdditionalRACH-Config-r17* (i.e., configuration of PRACH occasions) is only used for multiple PRACH transmissions or only for one feature of msg1-repetition (or used for multiple PRACH transmissions), and this separate configuration of PRACH occasions means that multiple PRACH transmissions is separate from the configuration of PRACH occasions for other features or the configuration of PRACH occasions for single PRACH transmission.

Alternatively, the PRACH resource configured by *rach-ConfigCommon-r17* in *AdditionalRACH-Config-r17* (i.e., configuration of PRACH occasions) is used for multiple PRACH transmission or the feature of msg1-repetition (or used for multiple PRACH transmissions), as well as for other features such as redcap and/or small data and/or nsag and/or msg3 Repetition, etc. This configuration of PRACH occasions is a configuration of PRACH occasions for multiple PRACH transmissions and other features, or, is a common configuration of PRACH occasions for single PRACH transmission.

For another example, the PRACH resource configured by *rach-ConfigCommon-r17* in *AdditionalRACH-Config-r17* (i.e., configuration of PRACH occasions) is only used for multiple PRACH transmissions or only for feature of msg1-repetition (or used for multiple PRACH transmissions) with one repetition number. This separate configuration of PRACH occasions means that multiple PRACH transmissions with the repetition number is separate from multiple PRACH transmissions with other repetition numbers.

Alternatively, the PRACH resource configured by *rach-ConfigCommon-r17* in *AdditionalRACH-Config-r17* (i.e., configuration of PRACH occasions) is used for multiple PRACH transmissions or for features of msg1-repetition (or used for multiple PRACH transmissions) with multiple repetition numbers. This configuration of PRACH occasions is a common configuration of PRACH occasions for multiple PRACH transmissions with multiple repetition numbers.

The PRACH configuration related to the present application is illustratively described in the above, but the present application is not limited thereto. For example, the specific configuration names may be changed, and configurations or signaling or information or the like with the same or similar functions or roles are within the scope of the present application.

In some embodiments, the time period is determined according to one or more valid ROs determined by separate configurations of PRACH occasions, or is determined according to one or more valid ROs determined by a common configuration of PRACH occasions.

In some embodiments, a feature or combination of features of PRACH transmission with different repetition numbers corresponds to separate configurations of PRACH occasions, or a feature or combination of features of PRACH transmission with different repetition numbers corresponds to a common configuration of PRACH occasions.

For example, the PRACH configuration may be configured by high-level parameters such as *rach-ConfigCommon* and *msgA-ConfigCommon.* According to the configured PRACH configuration, PRACH resources or PRACH occasions resources are determined.

For example, the PRACH resources may be associated with feature or combination of features; the feature or combination of features is indicated by an RRC parameter, and the PRACH resources or PRACH occasions configured by PRACH configuration are associated with (or used for) what kind of feature or combination of features.

The feature or combination of features may have MSG1 repetition/multiple PRACH transmissions. For example, the feature or combination of features is a feature that contains multiple PRACH transmissions, or a feature of multiple PRACH transmissions with different numbers.

For example, it is indicated that a feature of configuration of PRACH occasions is multiple PRACH transmissions with repetition number 2, or that features combination is combination of repetition number 2 and repetition number 4.

For another example, the separate configurations of PRACH occasions may be understood as follows: the configuration of PRACH occasions with feature or combination of features being MSG1 repetition/multiple PRACH transmissions is separate from the configuration of PRACH occasions for the single PRACH transmissions, or, multiple PRACH transmissions are distinguished from single PRACH transmissions on separate ROs.

The common configuration of PRACH occasions may be understood as follows: the configuration of PRACH occasions with feature or combination of features being MSG1 repetition/multiple PRACH transmissions is the same as the configuration of PRACH occasions for single PRACH transmissions, or is common (shared) with the configuration of PRACH occasions for the single PRACH transmissions. Alternatively, the multiple PRACH transmissions are distinguished from the single PRACH transmissions on shared ROs.

In embodiments of the present application, the valid ROs follows the definition of valid ROs in protocol 38.213, such as ROs that do not conflict with SSB and have a time interval of not less than a threshold with the SSB, as well as ROs that do not conflict/overlap with a downlink time-domain unit or the like in TDD configuration; the present application is not limited to this.

The PRACH resources are schematically explained in the above, and the first number K is further explained below.

In some embodiments, the first number K is configured and/or indicated by first information from a network device, and the first information includes radio resource control (RRC) signaling and/or MAC CE and/or downlink control information, where K is a positive integer.

For example, the network device may indicate the K value through information in SIB1.

In some embodiments, the first number configured and/or indicated by the network device is one value in a candidate value set.

For example, the K value and a candidate value set of the K value are indicated in SIB1. The K value may be configured, for example, in BWP-UplinkCommon, or in AdditionalRACH-Config, or in RACH-ConfigCommon, or in FeatureCombinationPreambles; the present application is not limited to this.

For example, the candidate values of the K value are {K1, K2, K3,......}, and gNB configures a K value from the candidate value set.

FIG. 3 is an example diagram of an association pattern period in an embodiment of the present application, wherein only the valid ROs are shown for convenience. As shown in FIG. 3, the number of SSB indexes is 4. According to the PRACH configuration as well as the SSB and preamble configurations, it is inferred that there are 8 valid ROs associated with the same SSB in the time domain within one association pattern period. If the PRACH configuration is used for multiple PRACH transmissions with a repetition number of 4, then two RO groups associated with the same SSB may be determined within one association pattern period. That is, as shown in FIG. 3, the valid ROs associated with SSB 0 may form two RO groups (RO group 1 and RO group 2). As shown in FIG. 3, one association pattern period may be determined as a repeatable pattern associating the SSB with RO. For example, if the candidate values for the K value are {1, 2, 3, 4}, gNB may configure the values in the candidate value set, that is, K is 1.

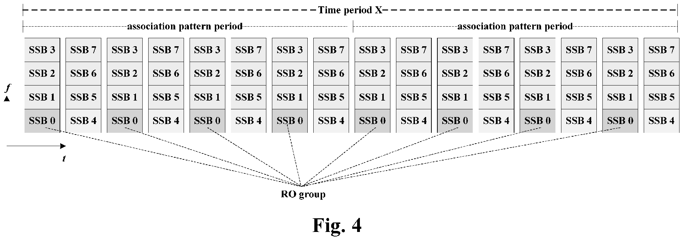

FIG. 4 is another example diagram of an association pattern period in an embodiment of the present application, wherein only the valid ROs are shown for convenience. As shown in FIG. 4, the number of SSB indexes is 8. According to the PRACH configuration as well as the SSB and preamble configurations, it is inferred that there are 4 valid ROs associated with the same SSB in the time domain within one association pattern period. If the PRACH configuration is used for multiple PRACH transmissions with a repetition number of 8, then one RO group associated with the same SSB may be determined within two association pattern periods. As shown in FIG. 4, the valid ROs associated with SSB 0 may form one RO group (RO group). As shown in FIG. 4, two association pattern periods may be determined as a repeatable pattern associating the SSB with RO. For example, if the candidate values for the K value are {1, 2, 3, 4}, gNB may configure the values in the candidate value set, that is, K is 2.

In some embodiments, the first association pattern period corresponds to a first candidate value set, and the second association pattern period corresponds to a second candidate value set; the first association pattern period is different from the second association pattern period.

For example, the K values corresponding to the association pattern periods are shown in Table 1 below.

**Table 1. Correspondence between association pattern periods and K values**

| Association pattern period (ms) | K (number of association pattern period) |
|---|---|
| 10 | {1, 2, 4, 8, 16, 32, 64, 128} |
| 20 | {1, 2, 4, 8, 16, 32, 64} |
| 40 | {1, 2, 4, 8, 16, 32} |
| 80 | {1, 2, 4, 8, 16} |
| 160 | {1, 2, 4, 8} |

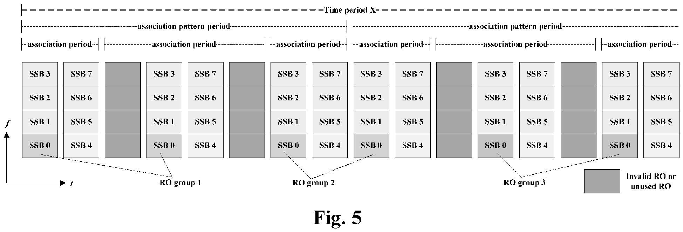

FIG. 5 is another example diagram of an association pattern period in an embodiment of the present application. As shown in FIG. 5, the number of SSB indexes is 8. According to the PRACH configuration as well as the SSB and preamble configurations, it is inferred that one PRACH configuration period is 10 ms, and 4 SSBs may be mapped in one PRACH configuration period. One association pattern period consists of 2, 4, and 2 association periods, and one association pattern period is 80 ms. As can be seen from Table 1 above, the configurable K values are {1, 2, 4, 8, 16}. The ROs marked in gray in FIG. 5 are invalid ROs or ROs that are not able to map SSB (which may be referred to as unused ROs).

As shown in FIG. 5, there are three valid ROs associated with the same SSB in the time domain within one association pattern period. If the PRACH configuration is used for multiple PRACH transmissions with a repetition number of 2, then three RO groups associated with the same SSB may be determined within two association pattern periods. As shown in FIG. 5, the valid ROs associated with SSB 0 form three RO groups (RO group 1, RO group 2 and RO group 3). As shown in FIG. 5, two association pattern periods may be determined as a repeatable pattern associating the SSB with RO. For example, if the candidate values for the K value are {1, 2, 3, 4, 8, 16}, gNB may configure the values in the candidate value set, that is, K is 2.

The case where the network device directly configures K values is illustratively explained in the above, and cases where K values are obtained through other parameters will be explained below.

In some embodiments, the first number is obtained based on at least second information, and the second information is used to configure and/or indicate the repetition number of the PRACH transmission and/or the number of synchronization signal block (SSB) indexes.

In some embodiments, one repetition number is configured for the PRACH transmission; or a plurality of repetition numbers are configured for the PRACH transmission, wherein one of the plurality of repetition numbers corresponds to one first number. The first number is equal to the configured repetition number, or the first number is an integer multiple of the configured repetition number, or the first number is the least common multiple of the number of the SSB indexes and the configured repetition number.

For example, only one number of multiple PRACH transmissions may be configured, or a plurality of numbers of multiple PRACH transmissions may be configured, and different numbers of multiple PRACH transmissions correspond to one K value respectively, wherein the features of different numbers of multiple PRACH transmissions correspond to common/separate configuration of PRACH occasions, or different numbers of multiple PRACH transmissions are on shared ROs/separate ROs.

In this case, the K value may be equal to the configured number of multiple PRACH transmissions, or the K value may be an integer multiple of the configured number of multiple PRACH transmissions, or the K value may be the least common multiple of the SSB index number and the repetition number; the present application is not limited to this.

For example, taking the K value being equal to the configured number of multiple PRACH transmissions as an example, N ROs with close time-domain positions that may be associated with the same SSB form one RO group, where N is the repetition number of multiple PRACH transmissions for configuration of PRACH occasion.

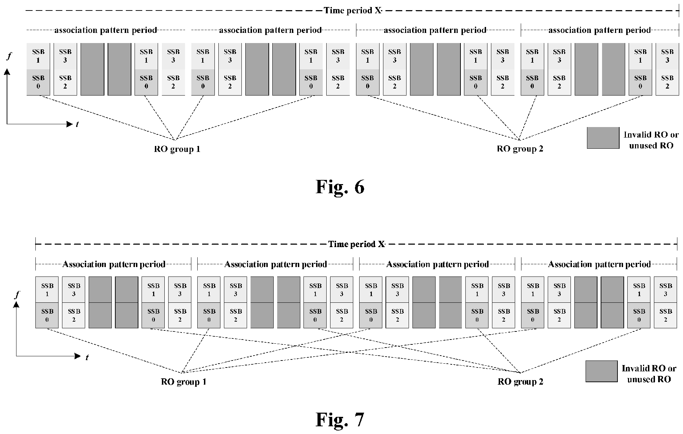

FIG. 6 is another example diagram of an association pattern period in an embodiment of the present application. As shown in FIG. 6, the number of SSB indexes is 4. According to the PRACH configuration as well as the SSB and preamble configurations, it is inferred that there are 2 valid ROs associated with the same SSB in the time domain within one association pattern period, wherein the ROs marked in gray are invalid ROs or unused ROs. If the PRACH configuration is used for multiple PRACH transmissions with a repetition number of 4, then the K value is equal to the repetition number, that is, K = 4, and the repeated RO group pattern consists of 4 association pattern periods. The ROs that make up RO group 1 are the four closest ROs in the time domain that are associated with SSB 0, while the ROs that make up RO group 2 are the four closest ROs in the time domain that are associated with SSB 0.

For another example, taking K value being equal to the configured number of multiple PRACH transmissions as an example. In each association pattern period, the same SSB is mapped, N ROs with the same time-domain relative position form one RO group. The time-domain relative position is the relative position of the RO relative to the starting position in the time domain in the association pattern period, where N is the repetition number of multiple PRACH transmissions for the configuration of PRACH occasion.

FIG. 7 is another example diagram of an association pattern period in an embodiment of the present application. As shown in FIG. 7, the number of SSB indexes is 4. According to the PRACH configuration as well as the SSB and preamble configurations, it is inferred that there are 2 valid ROs associated with the same SSB in the time domain within one association pattern period, wherein the ROs marked in gray are invalid ROs or unused ROs. If the PRACH configuration is used for multiple PRACH transmissions with a repetition number of 4, then the K value is equal to the repetition number, that is, K = 4, and the repeated RO group pattern consists of 4 association pattern periods. The ROs that make up RO group 1 are the four ROs that have the same relative position in the time domain and are associated with SSB 0 in each association pattern period, while the ROs that make up RO group 2 are the four ROs that have the same relative position in the time domain and are associated with SSB 0 in each association pattern period.

In some embodiments, a plurality of repetition numbers are configured for the PRACH transmission, wherein the plurality of repetition numbers correspond to one first number. The first number is equal to a maximum value among the configured plurality of repetition numbers, or the first number is an integer multiple of the maximum value of the configured plurality of repetition numbers, or the first number is the least common multiple of the configured plurality of repetition numbers, or the first number is the number of the configured plurality of repetition numbers, or the first number is the least common multiple of the number of the SSB indexes and the configured plurality of repetition numbers.

For example, a plurality of numbers of multiple PRACH transmissions may be configured, and the K values correspond to all of the configured numbers of multiple PRACH transmissions; wherein the features of different numbers of multiple PRACH transmissions correspond to common/separate configuration of PRACH occasions, or different numbers of multiple PRACH transmissions are on shared ROs/separate ROs.

In this case, the K value may be equal to the maximum value among the configured plurality of numbers of multiple PRACH transmissions, or the K value may be equal to an integer multiple of the maximum value among the configured plurality of numbers of multiple PRACH transmissions, or the K value may be equal to the least common multiple of the configured plurality of numbers of multiple PRACH transmissions, or the K value may be equal to the number of configured number of multiple PRACH transmissions (e.g., K = 2 when two repetition numbers are configured), or the K value may be the least common multiple of the SSB index number and the repetition number; the present application is not limited to this.

For example, taking the K value being equal to the maximum value among the configured plurality of numbers of multiple PRACH transmissions as an example, the configured plurality of numbers of multiple PRACH transmissions are on shared ROs.

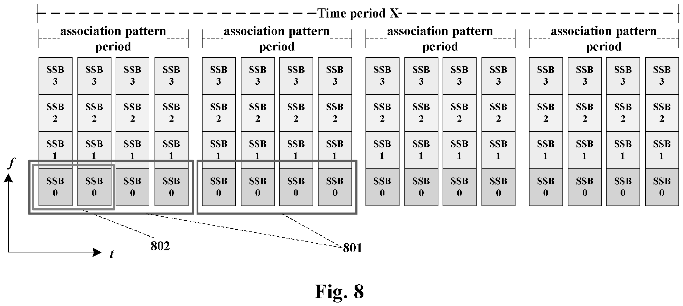

FIG. 8 is another example diagram of an association pattern period in an embodiment of the present application. As shown in FIG. 8, according to the PRACH configuration as well as the SSB and preamble configurations, it is inferred that there are 4 valid ROs associated with the same SSB in the time domain within one association pattern period. If the PRACH configuration is used for multiple PRACH transmissions with the repetition numbers 2 and 4, then the K value is equal to the maximum repetition number value of the PRACH configuration used for multiple PRACH transmissions, that is, K = 4. Then four association pattern periods is able to be determined as a repeatable pattern associating the SSB with RO groups.

As shown in FIG. 8, the number of SSBs is 4. The valid ROs associated with SSB 0 may form RO groups associated with SSB 0. For multiple PRACH transmissions with a repetition number of 4, the four valid ROs with close time-domain positions in FIG. 8 form one RO group, as shown by the four ROs in block 801 in FIG. 8. For multiple PRACH transmissions with a repetition number of 2, the two valid ROs with close time-domain positions in FIG. 8 form one RO group, as shown by the two ROs in block 802 in FIG. 8. Moreover, the multiple PRACH transmissions with a repetition number of 2 and the multiple PRACH transmissions with a repetition number of 4 are on the shared ROs.

For another example, taking the K value being equal to the maximum value among the configured plurality of numbers of multiple PRACH transmissions as an example, the configured plurality of numbers of multiple PRACH transmissions are on separate ROs.

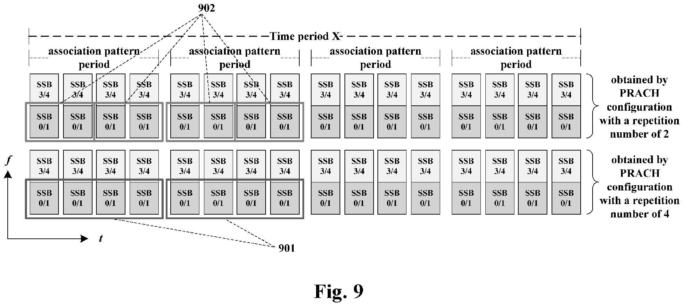

FIG. 9 is another example diagram of an association pattern period in an embodiment of the present application. As shown in FIG. 9, the number of SSB indexes is 4. The corresponding separate ROs in different frequency domains are obtained according to separate PRACH configurations with repetition numbers of 4 and 2. There are four valid ROs associated with the same SSB in the time domain in the association pattern period for two multiple PRACH transmissions. If the PRACH configurations of two multiple PRACH transmissions are used for multiple PRACH transmissions with repetition numbers 2 and 4, respectively, then the K value is equal to the maximum repetition number value, that is, K = 4. Therefore, four association pattern periods is able to be determined as a repeatable pattern associating the SSB with RO groups.

As shown in FIG. 9, for multiple PRACH transmissions with a repetition number of 4, the valid ROs associated with SSB 0/1 may form RO groups associated with SSB 0/1. The four valid ROs with close time-domain positions in FIG. 9 form one RO group, as shown by the four ROs in block 901 in FIG. 9.

As shown in FIG. 9, for multiple PRACH transmissions with a repetition number of 2, the valid ROs associated with SSB 0/1 may form RO groups associated with SSB 0/1. The two ROs with close time-domain positions in FIG. 9 form one RO group, as shown by the two ROs in block 902 in FIG. 9.

The cases where K values are obtained through other parameters are illustratively explained in the above, and cases of default or fixed values will be explained below.

In some embodiments, the first number is a default value or a fixed value.

For example, the K value is a fixed default value, such as K = 8, which means that multiple PRACH transmissions may achieve the maximum repetition number value.

For another example, the K value is a value in the candidate set. For example, for different association pattern period values, the value of K is one of the candidate values in the set, and the K value is a value of the least association pattern periods associated with at least one RO group for each SSB index.

Taking the candidate value set as an example, for the first association pattern period, for example, the candidate value set of the K value is a first set. For the second association pattern period, the candidate value set for the K value is a second set. For example, the K values corresponding to the association pattern periods are shown in Table 2 below.

**Table 2. Correspondence between association pattern periods and K values**

| Association pattern period (ms) | K (number of association pattern period) |
|---|---|
| 10 | {1, 2, 4, 8, 16, 32, 64} |
| 20 | {1, 2, 4, 8, 16, 32} |
| 40 | {1, 2, 4, 8, 16} |
| 80 | {1, 2, 4, 8} |
| 160 | {1, 2, 4} |

Taking the smallest association pattern period value as an example, the K value is the smallest value that is able to ensure that all SSBs are associated with the RO group.

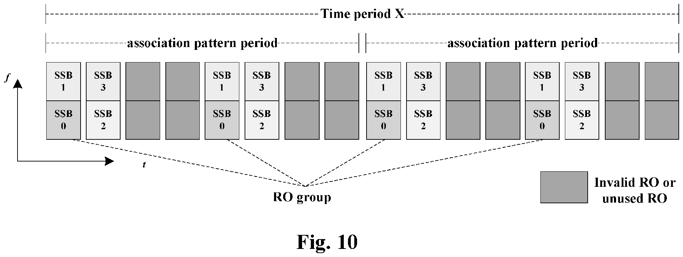

FIG. 10 is another example diagram of an association pattern period in an embodiment of the present application. As shown in FIG. 10, the number of SSB indexes is 4. According to the PRACH configuration as well as the SSB and preamble configurations, it is inferred that one PRACH configuration period is 10 ms, and there are 8 PRACH configuration periods in one association pattern period, thus the period is 80 ms, and there are 2 valid ROs associated with the same SSB in the time domain within one association pattern period, wherein the ROs marked in gray are invalid ROs or unused ROs. This PRACH configuration is used for multiple PRACH transmissions with a repetition number of 4.

As can be seen from the Table 2 above, for an association pattern period of 80 ms, the candidate value set for the K value is {1, 2, 4, 8}. For multiple PRACH transmissions with a repetition number of 4, four ROs associated with the same SSB in the time domain form one RO group, as shown in FIG. 10, at least two association pattern periods may ensure that all SSBs are associated with one RO group, so the K value is 2.

For another example, K is the smallest value that allows the number of ROs in the time domain in time period X to form at least one RO group, or K is the smallest value that allows the number of ROs associated with the same SSB index in the time domain in time period X to be greater than or equal to the number of multiple PRACH transmissions.

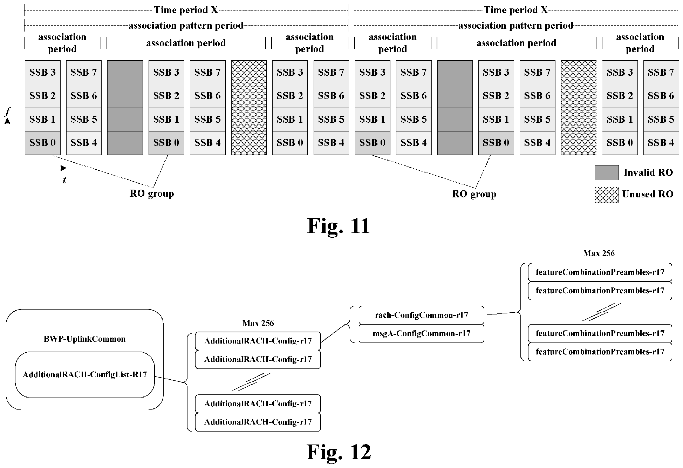

FIG. 11 is another example diagram of an association pattern period in an embodiment of the present application. As shown in FIG. 11, the number of SSB indexes is 8. According to the PRACH configuration as well as the SSB and preamble configurations, it is inferred that one PRACH configuration period is 10 ms, and 4 SSBs may be mapped in one PRACH configuration period. One association pattern period consists of 2, 4, and 2 association periods respectively, with one association pattern period being 80 ms.

If the repetition number of multiple PRACH transmissions is 2, as shown in FIG. 11, the number of ROs associated with the same SSB index in one association pattern period is 3, which is greater than the repetition number of 2 of multiple PRACH transmissions. Therefore, the ROs in at least one association pattern period may form an RO group, and time period X is one association pattern period, that is, K is 1.

As shown in FIG. 11, invalid ROs are the ROs that conflict with SSB burst or UL/DL TDD configuration, and the invalid ROs are represented by gray blocks in FIG. 11. Unused ROs is a set of ROs that are not able to map 8 SSB indexes, i.e., one SSB-to-RO mapping cycle is not able to be formed, and the unused ROs are represented by grid blocks in FIG. 11.

The PRACH resource configurations in embodiments of the present application will be further explained below. The K value may be obtained from these configurations, and thus the time period X may be determined.

In some embodiments, for all PRACH configurations of a feature or combination of features having PRACH transmission in uplink common configuration, a time period of the all PRACH configurations corresponds to the first number; or,

for one PRACH configuration of a feature or combination of features having PRACH transmission in uplink common configuration, all the combination of features corresponding to a plurality of different repetition numbers of PRACH transmissions, the time period for the PRACH transmission corresponding to all the combination of features corresponds to the first number; or,
for one PRACH configuration of a feature or combination of features having PRACH transmission in uplink common configuration, the one combination of features corresponding to a plurality of different repetition numbers of PRACH transmissions, the time period for the PRACH transmission corresponding to the one combination of features corresponds to the first number; or,
for one PRACH configuration of a feature or combination of features having PRACH transmission in uplink common configuration, the one feature corresponding to different repetition numbers of PRACH transmissions, the time period for the PRACH transmission corresponding to the one feature corresponds to the first number.

FIG. 12 is an example diagram of a PRACH configuration in an embodiment of the present application. As shown in FIG. 12, the PRACH configuration may include BWP-UplinkCommon, AdditionalRACH-Config, rach-ConfigCommon, featureCombinationPreambles and the like, and the specific meanings of these configurations may refer to relevant technologies.

For example, for all AdditionalRACH-Configs in BWP-UplinkCommon, one or more K values may be determined, namely one time period X or more time periods X. For multiple PRACH transmissions applicable to rach-ConfigCommon of different AdditionalRACH-Configs in BWP-UplinkCommon, the repetition number may be different.

For another example, for one AdditionalRACH-Config in BWP-UplinkCommon, all the featureCombinationPreambles in the rach-ConfigCommon in this AdditionalRACH-Config may determine one or more K values, namely one time period X or more time periods X. For multiple PRACH transmissions applicable to the feature or feature combinations of different featureCombinationPreambles in rach-ConfigCommon, the repetition number may be different.

For another example, for one AdditionalRACH-Config in BWP-UplinkCommon, one featureCombinationPreambles in the rach-ConfigCommon in this AdditionalRACH-Config may determine one or more K values, namely one time period X or more time periods X. The feature combination of one featureCombinationPreambles is multiple PRACH transmission with different repetition numbers.
examples of obtaining K values have been illustratively explained in the above, and the present application is not limited to this. For example, various methods may be combined.

In some embodiments, the first number is obtained according to the first information and/or the second information, or the first number is obtained according to the first information and the default value or the fixed value, or the first number is obtained according to the second information and the default value or the fixed value; the first information is used to configure and/or indicate the first number, and the second information is used to configure and/or indicate the repetition number of the PRACH transmission and/or the number of the synchronization signal block (SSB) indexes.

For example, the case where the network device directly configures K values may be combined with that the K values are default. For example, for multiple PRACH transmissions, there are K association pattern periods in the time period X;
When the UE is configured with a K value, the time period X is determined according to the configured K value, and the pattern duration associated between SSB and RO groups is K association pattern periods;
When the UE is not configured with a K value, the time period X is determined according to the default K value, and the pattern duration associated between SSB and RO groups is K association pattern periods, or the K value is the smallest value in the candidate value set that is associated with at least one RO group for each SSB index.

For another example, the case where the network device directly configures K values may be combined with that the K values are obtained through other parameters. For example, for multiple PRACH transmissions, there are K association pattern periods in the time period X;
When the UE is configured with a K value, the time period X is determined according to the configured K value, and the pattern duration associated between SSB and RO groups is K association pattern periods;
When the UE is not configured with a K value,
the multiple PRACH transmissions adopt a separate configuration of PRACH occasions, or the feature for the random access process is indicated as the multiple PRACH transmissions with a repetition number of N, the K value is the repetition number of the multiple PRACH transmissions, or,
the multiple PRACH transmissions adopt a separate configuration of PRACH occasions, or the multiple PRACH transmissions with different repetition numbers adopt a common configuration of PRACH occasions, or the feature for the random access process is indicated as the multiple PRACH transmissions, and the K value is the maximum value of the repetition number configured for the multiple PRACH transmissions.

For another example, the feature may be indicated jointly with the parameter indicating the number of multiple PRACH transmissions, where the K value is a multiple of the number of multiple PRACH transmissions. Table 3 shows an example of indication joint with signaling of other parameters.

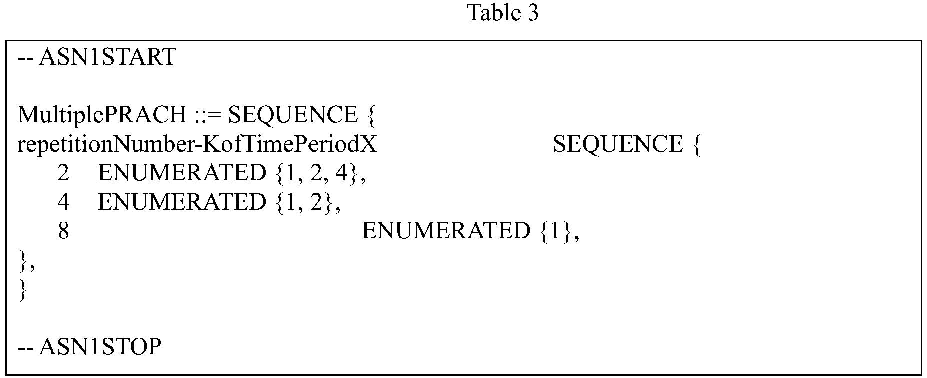

The limitations related to K values will be further schematically explained below.

In some embodiments, the first number of association pattern periods are a smallest duration available for determining a repeated PRACH occasion group pattern (RO group pattern); for the PRACH occasions unavailable for forming or do not need to form the PRACH occasion group in the association pattern period, the SSB index is not mapped on the PRACH occasion (RO) or the PRACH transmission is not performed on the PRACH occasion (RO).

In some embodiments, the PRACH transmission that is not performed on the PRACH occasion (RO) includes at least multiple PRACH transmissions. For example, the ROs are at least not used for multiple PRACH transmissions and may be used for single PRACH transmission.

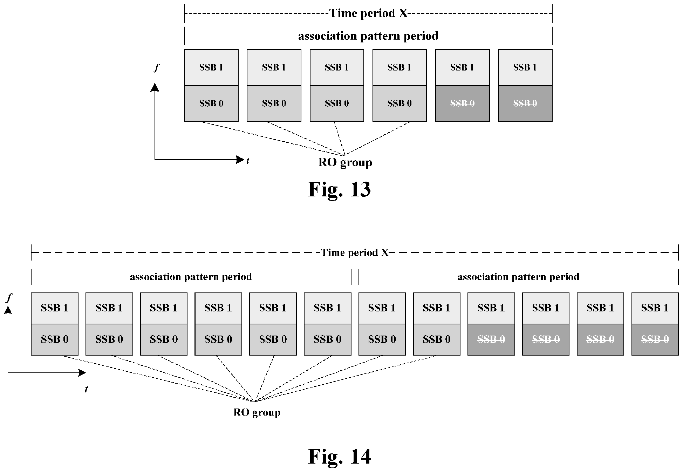

FIG. 13 is another example diagram of an association pattern period in an embodiment of the present application, taking that the network device directly configures K values as an example. As shown in FIG. 13, the number of SSB indexes is 2. According to the PRACH configuration as well as the SSB and preamble configurations, it is inferred that there are 6 valid ROs associated with the same SSB in the time domain within one association pattern period. If the PRACH configuration is used for multiple PRACH transmissions with a repetition number of 4, then one RO group associated with the same SSB may be determined within one association pattern period.

As shown in FIG. 13, the first four valid ROs associated with SSB 0 may form one RO group. And the two ROs marked in gray and associated with SSB 0 in the association pattern period are not able to make up any more a RO group with multiple PRACH transmissions of 4. Therefore, these two ROs are no longer associated with SSB or no longer used for PRACH transmissions. As shown in FIG. 13, one association pattern period may be determined as a repeatable pattern associating the SSB with RO. For example, if the candidate values for the K value are {1, 2, 3, 4}, gNB may configure the values in the candidate value set, that is, K is 1.

FIG. 14 is another example diagram of an association pattern period in an embodiment of the present application, taking that the network device directly configures K values as an example. As shown in FIG. 14, the number of SSB indexes is 2. According to the PRACH configuration as well as the SSB and preamble configurations, it is inferred that there are 6 valid ROs associated with the same SSB in the time domain within one association pattern period. If the PRACH configuration is used for multiple PRACH transmissions with a repetition number of 8, then one RO group associated with the same SSB may be determined within two association pattern periods.

As shown in FIG. 14, the first six valid ROs associated with SSB 0 may form one RO group. And the four ROs marked in gray and associated with SSB 0 in the association pattern period are not able to make up any more a RO group with multiple PRACH transmissions of 8. Therefore, these four ROs are no longer associated with SSB or no longer used for PRACH transmissions. As shown in FIG. 14, one association pattern period may be determined as a repeatable pattern associating the SSB with RO. For example, if the candidate values for the K value are {1, 2, 3, 4}, gNB may configure the values in the candidate value set, that is, K is 2.

In some embodiments, the first number of association pattern periods are a smallest duration available for determining a repeated PRACH occasion group pattern (RO group pattern); all valid PRACH occasions (ROs) in the first number of association pattern periods are used for the PRACH transmission.

For example, the PRACH transmission is multiple PRACH transmissions, which means that the same preamble is transmitted repeatedly in the PRACH transmission, but the present application is not limited to this, and other names may also be used for the PRACH transmission.

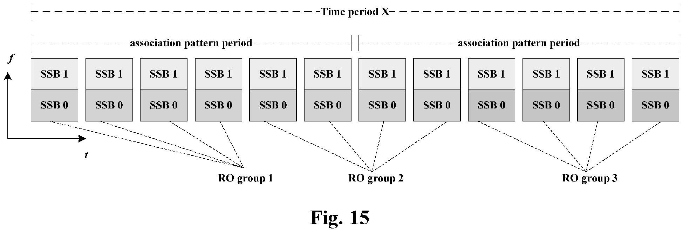

FIG. 15 is another example diagram of an association pattern period in an embodiment of the present application, taking that the network device directly configures K values as an example. As shown in FIG. 15, the number of SSB indexes is 2. According to the PRACH configuration as well as the SSB and preamble configurations, it is inferred that there are 6 valid ROs associated with the same SSB in the time domain within one association pattern period. If the PRACH configuration is used for multiple PRACH transmissions with a repetition number of 4, then one RO group associated with the same SSB may be determined within one association pattern period.

As shown in FIG. 15, the first four valid ROs associated with SSB 0 may form one RO group (RO group 1). The last two ROs associated with SSB 0 in this association pattern period may form one RO group (RO group 2) with the first two ROs associated with SSB 0 in the next association pattern period, and the remaining four ROs associated with SSB 0 in the second association pattern period may exactly form one RO group (RO group 3). As shown in FIG. 15, two association pattern periods may be determined as a repeatable pattern associating the SSB with RO. For example, if the candidate values for the K value are {1, 2, 3, 4}, gNB may configure the values in the candidate value set, that is, K is 2.

In some embodiments, in the time period, for PRACH occasions (ROs) unavailable for forming a RO group that maps a third number of SSB indexes outside an integer number of PRACH occasion groups (RO groups), the SSB index is not mapped on the PRACH occasion (RO) or the PRACH transmission is not performed on the PRACH occasion (RO).

For example, N ROs may form a complete RO group, and after a plurality of ROs form an integer number of RO groups in this time period, there may still be one or more ROs remaining, and if these ROs are not able to form an RO group that maps all SSB indexes, then SSB indexes are not be mapped on these ROs or PRACH transmission is not be performed on these ROs.

In some embodiments, the PRACH transmission that is not performed on the PRACH occasion (RO) is multiple PRACH transmissions. For example, the ROs are at least not used for multiple PRACH transmissions and may be used for single PRACH transmission.

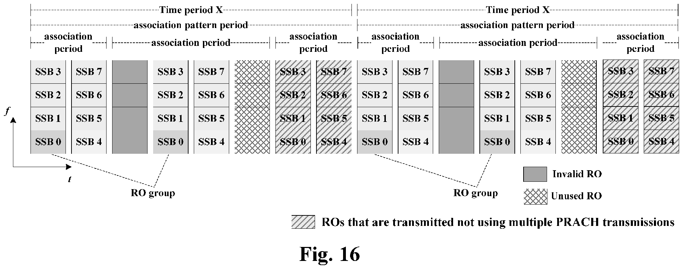

FIG. 16 is another example diagram of an association pattern period in an embodiment of the present application. As shown in FIG. 16, the number (third number) of the SSB indexes is 8. According to the PRACH configuration as well as the SSB and preamble configurations, it is inferred that one PRACH configuration period is 10 ms, and 4 SSBs may be mapped in one PRACH configuration period. One association pattern period consists of 2, 4, and 2 association periods respectively, with one association pattern period being 80 ms.

If the repetition number of multiple PRACH transmissions is 2, as shown in FIG. 16, the number of ROs associated with the same SSB index in one association pattern period is 3, which is greater than the repetition number of 2 of multiple PRACH transmissions. Therefore, the ROs in at least one association pattern period may form an RO group, and time period X is one association pattern period, that is, K is 1.

As shown in FIG. 16, if the ROs in the last association period of each association pattern period are not able to form one RO group, they are no longer used for multiple PRACH transmissions. The ROs that are not used for multiple PRACH transmissions are represented by diagonal blocks in FIG. 16. The invalid ROs are the ROs that conflict with SSB burst or UL/DL TDD configuration, and the invalid ROs are represented by gray blocks in FIG. 16. Unused ROs is a set of ROs that are not able to map 8 SSB indexes, i.e., one SSB-to-RO mapping cycle is not able to be formed, and the unused ROs are represented by grid blocks in FIG. 16.

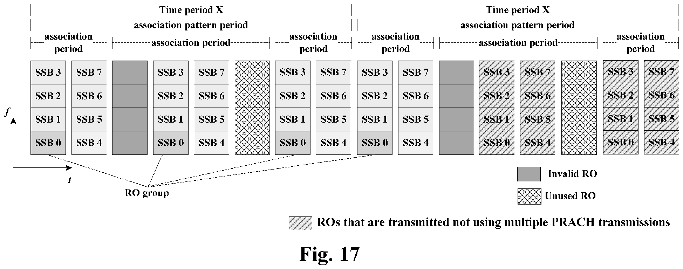

FIG. 17 is another example diagram of an association pattern period in an embodiment of the present application. As shown in FIG. 17, the number of the SSB indexes is 8. If the repetition number of multiple PRACH transmissions is 4, it can be seen from FIG. 17 that the number of ROs associated with the same SSB index in one association pattern period is 3. The ROs in at least 2 association pattern periods may form an RO group. Therefore, the time period X is 2 association pattern periods, that is, K is 2.

As shown in FIG. 17, if the ROs in the last two association periods of the last association pattern period in each time period X are not able to form one RO group, they are no longer used for multiple PRACH transmissions. The ROs that are not used for multiple PRACH transmissions are represented by diagonal blocks in FIG. 17. The invalid ROs are the ROs that conflict with SSB burst or UL/DL TDD configuration, and the invalid ROs are represented by gray blocks in FIG. 17. Unused ROs is a set of ROs that are not able to map 8 SSB indexes, i.e., one SSB-to-RO mapping cycle is not able to be formed, and the unused ROs are represented by grid blocks in FIG. 17.

In some embodiments, the maximum value of the first number is Kmax; the maximum value of the time period is Tmax, and the time period is in the unit of, for example, milliseconds (ms).

For example, Kmax is a default fixed value or indicated by the base station. For example, K is the maximum value in the configured numbers of multiple PRACH transmissions, which does not exceed Kmax.

In embodiments of the present application, the terminal equipment may quickly obtain the RO resources for multiple PRACH transmissions and ensure the transmission of multiple PRACH transmissions, thereby improving the coverage capability of the system.

In addition, different SSB-RO group mapping pattern repetition periods may be adopted for different configurations of multiple PRACH transmissions. For scenarios that require reducing transmission latency, it is possible to minimize the repetition period of mapping all SSBs to the RO group, thereby reducing the transmission interval time and/or duration time of multiple PRACH transmissions as well as the time for the base station to detect the PRACH, thereby reducing the transmission latency of multiple PRACH transmissions.

In addition, for scenarios with limited resources, it is possible to maximize the utilization of RO resources for transmitting multiple PRACH transmissions, thereby improving the resource utilization of PRACH transmissions.

The embodiments above only schematically illustrate the present application, but the present application is not limited to this, and appropriate variations may also be made on the basis of the above embodiments. For example, the above embodiments may be used separately, or one or more of the above embodiments may be combined.

As can be seen from the above embodiments, the terminal equipment determines the second number of ROs related to a time period, wherein the time period is a first number of association pattern periods of SSBs and ROs. As a result, the terminal equipment may quickly obtain RO resources for multiple PRACH transmissions and ensure that all SSBs in the multiple PRACH transmissions are mapped to the ROs, thereby improving the coverage capability of the system.

### Embodiments of Second Aspect

The embodiments of the present application provide a PRACH reception method, which is explained from a network device side. The embodiments of the second aspect can be combined with the embodiments of the first aspect, and the same content as the embodiments of the first aspect will not be repeated.

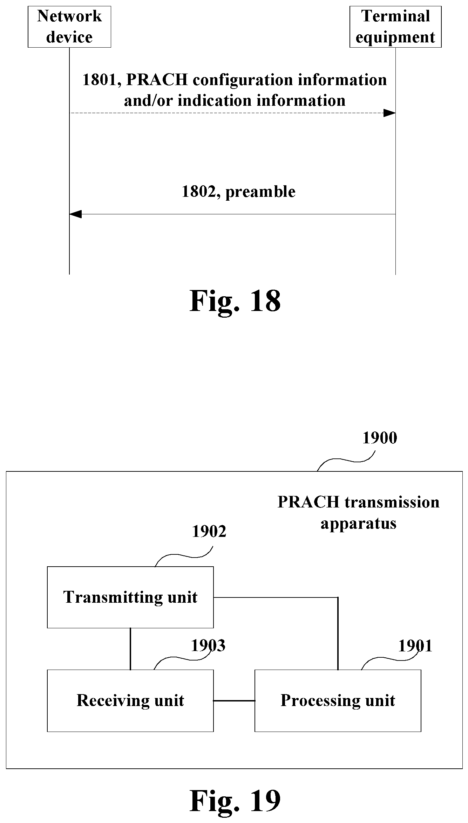

FIG. 18 is a schematic diagram of a PRACH reception method in an embodiment of the present application. As shown in FIG. 18, the method includes:
1802: a network device receives a preamble that is repeatedly transmitted by a terminal equipment on a second number of ROs,
wherein the terminal equipment determines the second number of ROs related to a time period, wherein the time period is a first number of association pattern periods of synchronization signal blocks (SSBs) and PRACH occasions (ROs) (i.e., SSB-to-RO association pattern periods).

In some embodiments, as shown in FIG. 18, the method may further include:
1801: the network device transmits PRACH configuration information and/or indication information to the terminal equipment.

It is worth noting that FIG. 18 above only schematically illustrates the embodiment of the present application, but the present application is not limited to this. For example, the order of execution between operations may be adjusted appropriately, and some other operations may be added or one or more operations may be removed. Those skilled in the art may make appropriate variations in accordance with the above contents, and which is not limited to the disclosure of FIG. 18 above.

In some embodiments, the time period is determined based on a valid PRACH occasion (RO) configured by separate configuration of ROs and/or common configuration of ROs.

In some embodiments, the second number N is the repetition number of the PRACH transmission, where N is an integer greater than 1.

In some embodiments, a feature or combination of features of PRACH transmission with different repetition numbers corresponds to separate configuration of PRACH occasions, or a feature or combination of features of PRACH transmission with different repetition numbers corresponds to common configuration of PRACH occasions.

In some embodiments, the first number K is configured and/or indicated by first information from a network device, and the first information includes a radio resource control (RRC) signaling and/or a MAC CE and/or downlink control information, where K is a positive integer.

In some embodiments, the first number configured and/or indicated by the network device is one value in a candidate value set.

In some embodiments, a first association pattern period corresponds to a first candidate value set, and a second association pattern period corresponds to a second candidate value set; the first association pattern period is different from the second association pattern period.

In some embodiments, the first number is obtained according to at least second information, and the second information is used to configure and/or indicate the repetition number of the PRACH transmission and/or number of the synchronization signal block (SSB) indexes.

In some embodiments, one repetition number is configured for the PRACH transmission; or a plurality of repetition numbers are configured for the PRACH transmission, wherein one of the plurality of repetition numbers corresponds to one first number.

In some embodiments, the first number is equal to the configured repetition number, or the first number is an integer multiple of the configured repetition number, or the first number is the least common multiple of the number of the SSB indexes and the configured repetition number.

In some embodiments, a plurality of repetition numbers are configured for the PRACH transmission, wherein the plurality of repetition numbers correspond to one first number.

In some embodiments, the first number is equal to a maximum value among the configured plurality of repetition numbers, or the first number is an integer multiple of the maximum value of the configured plurality of repetition numbers, or the first number is the least common multiple of the configured plurality of repetition numbers, or the first number is the number of the configured plurality of repetition numbers, or the first number is the least common multiple of the number of the SSB indexes and the configured plurality of repetition numbers.

In some embodiments, the first number is a default value or a fixed value.

In some embodiments, the first number is a smallest value that allows the number of ROs in a time domain during the time period to form at least one RO group, or the first number is a smallest value that allows the number of ROs associated with the same SSB index in the time domain during the time period is greater than or equal to the repetition number of the PRACH transmission.

In some embodiments, the first number is obtained according to the first information and/or the second information, or the first number is obtained according to the first information and the default value or the fixed value, or the first number is obtained according to the second information and the default value or the fixed value;
the first information is used to configure and/or indicate the first number, and the second information is used to configure and/or indicate the repetition number of the PRACH transmission and/or the number of synchronization signal block (SSB) indexes.

In some embodiments, the first number of association pattern periods are a smallest duration available for determining a repeated PRACH occasion group pattern (RO group pattern);
for the PRACH occasions (ROs) unavailable for forming or do not need to form the PRACH occasion group in the association pattern period, the SSB index is not mapped on the PRACH occasion (RO) or the PRACH transmission is not performed on the PRACH occasion (RO).

In some embodiments, the first number of association pattern periods are a smallest duration available for determining a repeated PRACH occasion group pattern (RO group pattern);
all valid PRACH occasions (ROs) in the first number of association pattern periods are used for the PRACH transmission.

In some embodiments, in the time period, for PRACH occasions (ROs) unavailable for forming a RO group that maps a third number of SSB indexes outside an integer number of PRACH occasion groups (RO groups), the SSB index is not mapped on the PRACH occasion (RO) or the PRACH transmission is not performed on the PRACH occasion (RO).

In some embodiments, the PRACH transmission that is not performed on the PRACH occasion (RO) is multiple PRACH transmissions.

In some embodiments, for all PRACH configurations with a feature or combination of features having PRACH transmission in uplink common configuration, a time period of the all PRACH configurations corresponds to the first number; or,
for one PRACH configuration with a feature or combination of features having PRACH transmission in uplink common configuration, all the combination of features corresponding to a plurality of different repetition numbers of PRACH transmissions, the time period for the PRACH transmission corresponding to all the combination of features corresponds to the first number; or,
for one PRACH configuration with a feature or combination of features having PRACH transmission in uplink common configuration, the one combination of features corresponding to a plurality of different repetition numbers of PRACH transmissions, and the time period for the PRACH transmission corresponding to the one combination of features corresponds to the first number; or,
for one PRACH configuration with a feature or combination of features having PRACH transmission in uplink common configuration, the one feature corresponding to different repetition numbers of PRACH transmissions, the time period for the PRACH transmission corresponding to the one feature corresponds to the first number.

In some embodiments, the maximum value of the first number is Kmax; the maximum value of the time period is Tmax, and the time period is in the unit of, for example, milliseconds (ms).

The embodiments above only schematically illustrate the present application, but the present application is not limited to this, and appropriate variations may also be made on the basis of the above embodiments. For example, the above embodiments may be used separately, or one or more of the above embodiments may be combined.

As can be seen from the above embodiments, the terminal equipment determines the second number of ROs related to a time period, wherein the time period is a first number of association pattern periods of SSBs and ROs. As a result, the terminal equipment may quickly obtain RO resources for multiple PRACH transmissions and ensure that all SSBs in the multiple PRACH transmissions are mapped to the ROs, thereby improving the coverage capability of the system.

### Embodiments of Third Aspect

The embodiments of the present application provide a PRACH transmission apparatus. The apparatus may be, for example, a terminal equipment, or one or more parts or components configured in the terminal equipment, and the same content as the embodiments of the first aspect will not be repeated.

FIG. 19 is a schematic diagram of a PRACH transmission apparatus in an embodiment of the present application. As shown in FIG. 19, a PRACH transmission apparatus 1900 includes:
a processing unit 1901 configured to determine a second number of ROs related to a time period, wherein the time period is a first number of association pattern periods of synchronization signal blocks (SSBs) and PRACH occasions (ROs) (i.e., SSB-to-RO association pattern periods); and
a transmitting unit 1902 configured to repeatedly transmit a preamble on the second number of ROs.

In some embodiments, the time period is determined based on a valid PRACH occasion (RO) configured by separate configuration of ROs and/or common configuration of ROs.

In some embodiments, the second number N is the repetition number of the PRACH transmission, where N is an integer greater than 1.

In some embodiments, a feature or combination of features of PRACH transmission with different repetition numbers corresponds to separate configuration of PRACH occasions, or a feature or combination of features of PRACH transmission with different repetition numbers corresponds to common configuration of PRACH occasions.

In some embodiments, the first number K is configured and/or indicated by first information from a network device, and the first information includes a radio resource control (RRC) signaling and/or a MAC CE and/or downlink control information, where K is a positive integer.

In some embodiments, the first number configured and/or indicated by the network device is one value in a candidate value set.

In some embodiments, a first association pattern period corresponds to a first candidate value set, and a second association pattern period corresponds to a second candidate value set; the first association pattern period is different from the second association pattern period.

In some embodiments, the first number is obtained according to at least second information, and the second information is used to configure and/or indicate the repetition number of the PRACH transmission and/or number of the synchronization signal block (SSB) indexes.

In some embodiments, one repetition number is configured for the PRACH transmission; or a plurality of repetition numbers are configured for the PRACH transmission, wherein one of the plurality of repetition numbers corresponds to one first number.

In some embodiments, the first number is equal to the configured repetition number, or the first number is an integer multiple of the configured repetition number, or the first number is the least common multiple of the number of the SSB indexes and the configured repetition number.

In some embodiments, a plurality of repetition numbers are configured for the PRACH transmission, wherein the plurality of repetition numbers correspond to one first number.

In some embodiments, the first number is equal to a maximum value among the configured plurality of repetition numbers, or the first number is an integer multiple of the maximum value of the configured plurality of repetition numbers, or the first number is the least common multiple of the configured plurality of repetition numbers, or the first number is the number of the configured plurality of repetition numbers, or the first number is the least common multiple of the number of the SSB indexes and the configured plurality of repetition numbers.

In some embodiments, the first number is a default value or a fixed value.

In some embodiments, the first number is a smallest value that allows the number of ROs in a time domain during the time period to form at least one RO group, or the first number is a smallest value that allows the number of ROs associated with the same SSB index in the time domain during the time period is greater than or equal to the repetition number of the PRACH transmission.

In some embodiments, the first number is obtained according to the first information and/or the second information, or the first number is obtained according to the first information and the default value or the fixed value, or the first number is obtained according to the second information and the default value or the fixed value;
the first information is used to configure and/or indicate the first number, and the second information is used to configure and/or indicate the repetition number of the PRACH transmission and/or the number of synchronization signal block (SSB) indexes.

In some embodiments, the first number of association pattern period is a smallest duration available for determining a repeated PRACH occasion group pattern (RO group pattern);
for the PRACH occasions (ROs) unavailable for forming or do not need to form the PRACH occasion group in the association pattern period, the SSB index is not mapped on the PRACH occasion (RO) or the PRACH transmission is not performed on the PRACH occasion (RO).

In some embodiments, the first number of association pattern period is a smallest duration available for determining a repeated PRACH occasion group pattern (RO group pattern);
all valid PRACH occasions (ROs) in the first number of association pattern periods are used for the PRACH transmission.

In some embodiments, in the time period, for PRACH occasions (ROs) unavailable for forming a RO group that maps a third number of SSB indexes outside an integer number of PRACH occasion groups (RO groups), the SSB index is not mapped on the PRACH occasion (RO) or the PRACH transmission is not performed on the PRACH occasion (RO).

In some embodiments, the PRACH transmission that is not performed on the PRACH occasion (RO) is multiple PRACH transmission.

In some embodiments, for all PRACH configurations with a feature or combination of features having PRACH transmission in uplink common configuration, a time period of the all PRACH configurations corresponds to the first number; or,
for one PRACH configuration of a feature or combination with features having PRACH transmission in uplink common configuration, all the combination of features corresponding to a plurality of different repetition numbers of PRACH transmissions, the time period for the PRACH transmission corresponding to all the combination of features corresponds to the first number; or,
for one PRACH configuration with a feature or combination of features having PRACH transmission in uplink common configuration, the one combination of features corresponding to a plurality of different repetition numbers of PRACH transmissions, the time period for the PRACH transmission corresponding to the one combination of features corresponds to the first number; or,
for one PRACH configuration with a feature or combination of features having PRACH transmission in uplink common configuration, the one feature corresponding to different repetition numbers of PRACH transmissions, the time period for the PRACH transmission corresponding to the one feature corresponds to the first number.

In some embodiments, the maximum value of the first number is Kmax; the maximum value of the time period is Tmax.

In some embodiments, as shown in FIG. 19, the PRACH transmission apparatus 1900 may further include:
a receiving unit 1903 configured to receive PRACH configuration information and/or indication information transmitted by a network device.

It is worth noting that only the components or modules related to the present application are illustrated hereinabove, but the present application is not limited to this. The PRACH transmission apparatus 1900 may further include other components or modules, and the details of these components or modules can be seen by referring to the related art.

In addition, for the sake of simplicity, FIG. 19 only illustratively shows the connection relationship or signal trend between the individual components or modules, but it should be clear to those skilled in the art that various related techniques such as bus connections can be employed. The above individual components or modules can be implemented by hardware facilities such as a processor, a memory, a transmitter, a receiver, etc., which is not limited in the present application.

With the embodiments of the present application, the terminal equipment determines the second number of ROs related to a time period, wherein the time period is a first number of association pattern periods of SSBs and ROs. As a result, the terminal equipment may quickly obtain RO resources for multiple PRACH transmissions and ensure that all SSBs in the multiple PRACH transmissions are mapped to the ROs, thereby improving the coverage capability of the system.

### Embodiments of Fourth Aspect

The embodiments of the present application provide a PRACH reception apparatus. The apparatus may be, for example, a network device, or one or more parts or components configured in the network device, and the same content as the embodiments of the first and second aspects will not be repeated.

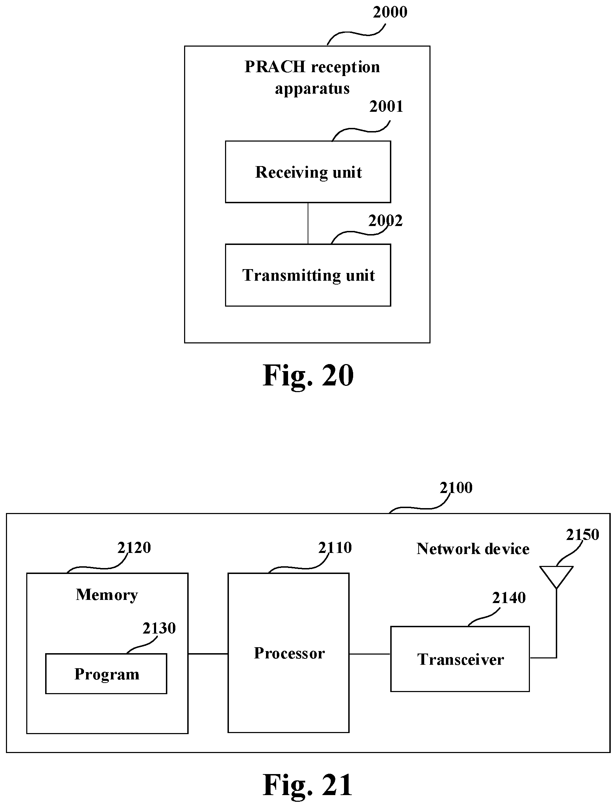

FIG. 20 is a schematic diagram of a PRACH reception apparatus in an embodiment of the present application. As shown in FIG. 20, a PRACH reception apparatus 2000 includes:
a receiving unit 2001 configured to receive a preamble that is repeatedly transmitted by a terminal equipment on a second number of ROs,
wherein the terminal equipment determines the second number of ROs related to a time period, wherein the time period is a first number of association pattern periods of synchronization signal blocks (SSBs) and PRACH occasions (ROs) (i.e., SSB-to-RO association pattern periods).

In some embodiments, as shown in FIG. 20, the PRACH reception apparatus 2000 may further include:
a transmitting unit 2002 configured to transmit PRACH configuration information and/or indication information to the terminal equipment.

It is worth noting that only the components or modules related to the present application are illustrated hereinabove, but the present application is not limited to this. The PRACH reception apparatus 2000 may further include other components or modules, and the details of these components or modules may be seen by referring to the related art.

In addition, for the sake of simplicity, FIG. 20 only illustratively shows the connection relationship or signal trend between the individual components or modules, but it should be clear to those skilled in the art that various related techniques such as bus connections may be employed. The above individual components or modules may be implemented by hardware facilities such as a processor, a memory, a transmitter, a receiver, etc., which is not limited in the present application.

With the embodiments of the present application, the terminal equipment determines the second number of ROs related to a time period, wherein the time period is a first number of association pattern periods of SSBs and ROs. As a result, the terminal equipment may quickly obtain RO resources for multiple PRACH transmissions and ensure that all SSBs in the multiple PRACH transmissions are mapped to the ROs, thereby improving the coverage capability of the system.

### Embodiments of Fifth Aspect

The embodiments of the present application further provide a communication system, referring to FIG. 1, the same content as the embodiments in the first to fourth aspects will not be repeated.

In some embodiments, the communication system 100 may include at least:
a terminal equipment configured to determine a second number of ROs related to a time period, wherein the time period is a first number of association pattern periods of synchronization signal blocks (SSBs) and PRACH occasions (ROs) (i.e., SSB-to-RO association pattern periods); and
a network device configured to receive a preamble that is repeatedly transmitted by the terminal equipment on a second number of ROs.

The embodiments of the present application further provide a network device, which may be, for example, a base station, but which is not limited in the present application, and may also be other network devices.

FIG. 21 is a schematic diagram of composition of the network device in an embodiment of the present application. As shown in FIG. 21, a network device 2100 may include a processor 2110 (such as a central processing unit (CPU)) and a memory 2120; the memory 2120 is coupled to the processor 2110. The memory 2120 may store various data and also may store the information processing program 2130, and the program 2130 is executed under the control of the processor 2110.

For example, the processor 2110 may be configured to execute the program to implement the PRACH reception method as described in the embodiment of the second aspect. For example, the processor 2110 may be configured to perform the following control of: receiving a preamble that is repeatedly transmitted by a terminal equipment on a second number of ROs,
wherein the terminal equipment determines the second number of ROs related to a time period, wherein the time period is a first number of association pattern periods of synchronization signal blocks (SSBs) and PRACH occasions (ROs) (i.e., SSB-to-RO association pattern periods).

In addition, as shown in FIG. 21, the network device 2100 may further include: a transceiver 2140 and an antenna 2150, etc., wherein the functions of the above components are similar to the relevant art, and will not be repeated here. It is worth noting that the network device 2100 is not necessarily required to include all of the components shown in FIG. 21; in addition, the network device 2100 may further include components not shown in FIG. 21, with reference to the relevant art.

The embodiments of the present application further provide a terminal equipment, but which is not limited in the present application, and may also be other devices.

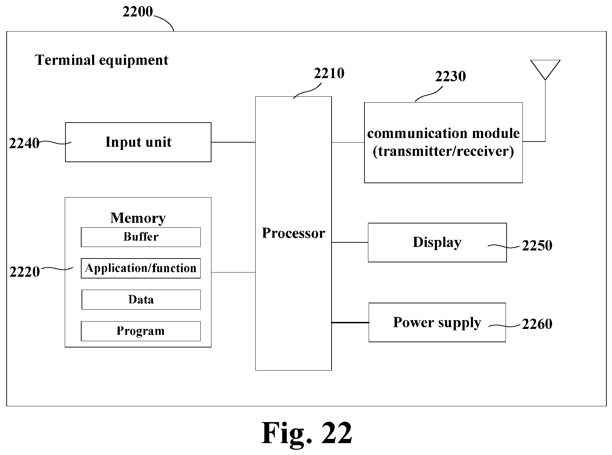

FIG. 22 is a schematic diagram of a terminal equipment in an embodiment of the present application. As shown in FIG. 22, a terminal equipment 2200 may include a processor 2210 and a memory 2220; the memory 2220 stores data and program, and is coupled to the processor 2210. It is worth noting that this figure is exemplary; other types of structures may also be used in addition to or instead of the structure to implement telecommunications functions or other functions.

For example, the processor 2210 may be configured to execute the program to implement the PRACH transmission method as described in the embodiment of the first aspect. For example, the processor 2210 may be configured to perform the following controls of: determining a second number of ROs related to a time period, wherein the time period is a first number of association pattern periods of synchronization signal blocks (SSBs) and PRACH occasions (ROs) (i.e., SSB-to-RO association pattern periods); and repeatedly transmitting a preamble on the second number of ROs.

As shown in FIG. 22, the terminal equipment 2200 may further include a communication module 2230, an input unit 2240, a display 2250, and a power supply 2260. The functions of the above components are similar to the relevant art, and will not be repeated here. It is worth noting that the terminal equipment 2200 is not necessarily required to include all of the components shown in FIG. 22, and the above components are not essential; in addition, the terminal equipment 2200 may further include components not shown in FIG. 22, with reference to the relevant art.

The embodiments of the present application further provide a computer program which, when being executed in the terminal equipment, causes the terminal equipment to execute the PRACH transmission method described in the embodiments of the first aspect.

The embodiments of the present application further provide a storage medium storing a computer program which causes the terminal equipment to execute the PRACH transmission method described in the embodiments of the first aspect.

The embodiments of the present application further provide a computer program which, when being executed in the network device, causes the network device to execute the PRACH reception method described in the embodiments of the second aspect.

The embodiments of the present application further provide a storage medium storing a computer program which causes the network device to execute the PRACH reception method described in the embodiments of the second aspect.

The above apparatuses and methods of the present application can be implemented by hardware or by hardware combined with software. The present application relates to a computer readable program which, when being executed by a logic unit, enables the logic unit to implement the apparatuses or components mentioned above, or enables the logic unit to implement the methods or steps described above. The present application also relates to storage medium for storing the above programs, such as a hard disk, a magnetic disk, a compact disc, a DVD, a flash memory, etc.

The method/device described in conjunction with the embodiments of the present application may be directly embodied as hardware, a software module executed by the processor, or a combination of both. For example, one or more of the functional block diagrams and/or combination thereof shown in the drawing may correspond to both software modules and hardware modules of the computer program flow. These software modules can correspond to the steps shown in the drawings respectively. These hardware modules can be realized, for example, by solidifying these software modules using field programmable gate arrays (FPGA).

The software module may reside in an RAM memory, a flash memory, an ROM memory, an EPROM memory, an EEPROM memory, a register, a hard disk, a removable disk, a CD-ROM, or a storage medium in any other form known in the art. A storage medium can be coupled to a processor so that the processor can read information from the storage medium and write information to the storage medium; or the storage medium can be a constituent part of the processor. The processor and the storage medium can be located in the ASIC. The software module can be stored in the memory of the mobile terminal or in a memory card that can be inserted into the mobile terminal. For example, if a device (such as a mobile terminal) uses a large-capacity MEGA-SIM card or a large-capacity flash memory device, the software module can be stored in the MEGA-SIM card or the large-capacity flash memory device.

One or more of the functional blocks and/or combination thereof shown in the drawing may be implemented as a general-purpose processor, a digital signal processor (DSP), an application-specific integrated circuit (ASIC), a field programmable gate array (FPGA) or other programmable logic device, a discrete gate or a transistor logic device, a discrete hardware component, or any appropriate combination thereof, for performing the functions described in the present application. One or more of the functional blocks and/or combination thereof shown in the drawing may also be implemented as combination of computing devices, such as combination of DSP and a microprocessor, multiple microprocessors, one or more microprocessors combined with DSP communication, or any other such configuration.

The present application is described in combination with specific embodiments hereinabove, but a person skilled in the art should know clearly that the description is exemplary, but not limitation to the protection scope of the present application. A person skilled in the art can make various variations and modifications to the present application according to spirit and principle of the application, and these variations and modifications should also be within the scope of the present application.

For implementation including the above embodiments, the following supplements are further disclosed:
1. A PRACH transmission method, including:
   a terminal equipment determines a second number of ROs related to a time period, wherein the time period is a first number of association pattern periods of synchronization signal blocks (SSBs) and PRACH occasions (ROs) (i.e., SSB-to-RO association pattern periods); and
   the terminal equipment repeatedly transmits a preamble on the second number of ROs.
2. The PRACH transmission method according to the supplement 1, wherein the time period is determined based on a valid PRACH occasion (RO) configured by separate configuration of ROs and/or common configuration of ROs.
3. The PRACH transmission method according to the supplement 2, wherein the second number N is the repetition number of the PRACH transmission, where N is an integer greater than 1;
   a feature or combination of features of PRACH transmission with different repetition numbers corresponds to separate configuration of PRACH occasions, or a feature or combination of features of PRACH transmission with different repetition numbers corresponds to common configuration of PRACH occasions.
4. The PRACH transmission method according to any one of the supplements 1 to 3, wherein the first number K is configured and/or indicated by first information from a network device, and the first information includes a radio resource control (RRC) signaling and/or a MAC CE and/or downlink control information, where K is a positive integer.
5. The PRACH transmission method according to the supplement 4, wherein the first number configured and/or indicated by the network device is one value in a candidate value set.
6. The PRACH transmission method according to the supplement 5, wherein a first association pattern period corresponds to a first candidate value set, and a second association pattern period corresponds to a second candidate value set; the first association pattern period is different from the second association pattern period.
7. The PRACH transmission method according to any one of the supplements 1 to 3, wherein the first number is obtained according to at least second information, and the second information is used to configure and/or indicate the repetition number of the PRACH transmission and/or number of the synchronization signal block (SSB) indexes.
8. The PRACH transmission method according to the supplement 7, wherein one repetition number is configured for the PRACH transmission; or a plurality of repetition numbers are configured for the PRACH transmission, wherein one of the plurality of repetition numbers corresponds to one first number.
9. The PRACH transmission method according to the supplement 8, wherein the first number is equal to the configured repetition number, or the first number is an integer multiple of the configured repetition number, or the first number is the least common multiple of the number of the SSB indexes and the configured repetition number.
10. The PRACH transmission method according to the supplement 7, wherein a plurality of repetition numbers are configured for the PRACH transmission, wherein the plurality of repetition numbers correspond to one first number.
11. The PRACH transmission method according to the supplement 10, wherein the first number is equal to a maximum value among the configured plurality of repetition numbers, or the first number is an integer multiple of the maximum value of the configured plurality of repetition numbers, or the first number is the least common multiple of the configured plurality of repetition numbers, or the first number is the number of the configured plurality of repetition numbers, or the first number is the least common multiple of the number of the SSB indexes and the configured plurality of repetition numbers.
12. The PRACH transmission method according to any one of the supplements 1 to 3, wherein the first number is a default value or a fixed value.
13. The PRACH transmission method according to any one of the supplements 1 to 3, wherein the first number is a smallest value that allows the number of ROs in a time domain during the time period to form at least one RO group, or the first number is a smallest value that allows the number of ROs associated with the same SSB index in the time domain during the time period is greater than or equal to the repetition number of the PRACH transmission.
14. The PRACH transmission method according to any one of the supplements 1 to 3, wherein the first number is obtained according to the first information and/or the second information, or the first number is obtained according to the first information and the default value or the fixed value, or the first number is obtained according to the second information and the default value or the fixed value;
   and the first information is used to configure and/or indicate the first number, and the second information is used to configure and/or indicate the repetition number of the PRACH transmission and/or the number of synchronization signal block (SSB) indexes.
15. The PRACH transmission method according to any one of the supplements 1 to 14, wherein the first number of association pattern period is a smallest duration available for determining a repeated PRACH occasion group pattern (RO group pattern);
   and for the PRACH occasions (ROs) unavailable for forming or do not need to form the PRACH occasion group in the association pattern period, the SSB index is not mapped on the PRACH occasion (RO) or the PRACH transmission is not performed on the PRACH occasion (RO).
16. The PRACH transmission method according to any one of the supplements 1 to 14, wherein the first number of association pattern period is a smallest duration available for determining a repeated PRACH occasion group pattern (RO group pattern);
   and all valid PRACH occasions (ROs) in the first number of association pattern periods are used for the PRACH transmission.
17. The PRACH transmission method according to any one of the supplements 1 to 16, wherein in the time period, for PRACH occasions (ROs) unavailable for forming a RO group that maps a third number of SSB indexes outside an integer number of PRACH occasion groups (RO groups), the SSB index is not mapped on the PRACH occasion (RO) or the PRACH transmission is not performed on the PRACH occasion (RO).
18. The PRACH transmission method according to the supplement 17, wherein the PRACH transmission that is not performed on the PRACH occasion (RO) is multiple PRACH transmissions.
19. The PRACH transmission method according to any one of the supplements 1 to 18, wherein,
   for all PRACH configurations with a feature or combination of features having PRACH transmission in uplink common configuration, a time period of the all PRACH configurations corresponds to the first number; or
   for one PRACH configuration with a feature or combination of features having PRACH transmission in uplink common configuration, all the combination of features corresponding to a plurality of different repetition numbers of PRACH transmissions, a time period for the PRACH transmission corresponding to all the combination of features corresponds to the first number; or,
   for one PRACH configuration with a feature or combination of features having PRACH transmission in uplink common configuration, the one combination of features corresponding to a plurality of different repetition numbers of PRACH transmissions, a time period for the PRACH transmission corresponding to the one combination of features corresponds to the first number; or,
   for one PRACH configuration with a feature or combination of features having PRACH transmission in uplink common configuration, the one feature corresponding to different repetition numbers of PRACH transmissions, a time period for the PRACH transmission corresponding to the one feature corresponds to the first number.
20. The PRACH transmission method according to any one of the supplements 1 to 19, wherein the maximum value of the first number is Kmax; the maximum value of the time period is Tmax.
21. A PRACH reception method, including:
   a network device receives a preamble that is repeatedly transmitted by a terminal equipment on a second number of Ros,
   wherein the terminal equipment determines the second number of ROs related to a time period, wherein the time period is a first number of association pattern periods of synchronization signal blocks (SSBs) and PRACH occasions (ROs) (i.e., SSB-to-RO association pattern periods).
22. The PRACH reception method according to the supplement 21, wherein the time period is determined based on a valid PRACH occasion (RO) configured by separate configuration of ROs and/or common configuration of ROs.
23. The PRACH reception method according to the supplement 22, wherein the second number N is the repetition number of the PRACH transmission, where N is an integer greater than 1;
   and a feature or combination of features of PRACH transmission with different repetition numbers corresponds to separate configuration of PRACH occasions, or a feature or combination of features of PRACH transmission with different repetition numbers corresponds to common configuration of PRACH occasions.
24. The PRACH reception method according to any one of the supplements 21 to 23, wherein the first number K is configured and/or indicated by first information from a network device, and the first information includes a radio resource control (RRC) signaling and/or a MAC CE and/or downlink control information, where K is a positive integer.
25. The PRACH reception method according to the supplement 24, wherein the first number configured and/or indicated by the network device is one value in a candidate value set.
26. The PRACH reception method according to the supplement 25, wherein a first association pattern period corresponds to a first candidate value set, and a second association pattern period corresponds to a second candidate value set; the first association pattern period is different from the second association pattern period.
27. The PRACH reception method according to any one of the supplements 21 to 23, wherein the first number is obtained according to at least second information, and the second information is used to configure and/or indicate the repetition number of the PRACH transmission and/or number of the synchronization signal block (SSB) indexes.
28. The PRACH reception method according to the supplement 27, wherein one repetition number is configured for the PRACH transmission; or a plurality of repetition numbers are configured for the PRACH transmission, wherein one of the plurality of repetition numbers corresponds to one first number.
29. The PRACH reception method according to the supplement 28, wherein the first number is equal to the configured repetition number, or the first number is an integer multiple of the configured repetition number, or the first number is the least common multiple of the number of the SSB indexes and the configured repetition number.
30. The PRACH reception method according to the supplement 27, wherein a plurality of repetition numbers are configured for the PRACH transmission, wherein the plurality of repetition numbers correspond to one first number.
31. The PRACH reception method according to the supplement 30, wherein the first number is equal to a maximum value among the configured plurality of repetition numbers, or the first number is an integer multiple of the maximum value of the configured plurality of repetition numbers, or the first number is the least common multiple of the configured plurality of repetition numbers, or the first number is the number of the configured plurality of repetition numbers, or the first number is the least common multiple of the number of the SSB indexes and the configured plurality of repetition numbers.
32. The PRACH reception method according to any one of the supplements 21 to 23, wherein the first number is a default value or a fixed value.
33. The PRACH reception method according to any one of the supplements 21 to 23, wherein the first number is a smallest value that allows the number of ROs in a time domain during the time period to form at least one RO group, or the first number is a smallest value that allows the number of ROs associated with the same SSB index in the time domain during the time period is greater than or equal to the repetition number of the PRACH transmission.
34. The PRACH reception method according to any one of the supplements 21 to 23, wherein the first number is obtained according to the first information and/or the second information, or the first number is obtained according to the first information and the default value or the fixed value, or the first number is obtained according to the second information and the default value or the fixed value;
   and the first information is used to configure and/or indicate the first number, and the second information is used to configure and/or indicate the repetition number of the PRACH transmission and/or the number of synchronization signal block (SSB) indexes.
35. The PRACH reception method according to any one of the supplements 21 to 34, wherein the first number of association pattern period is a smallest duration available for determining a repeated PRACH occasion group pattern (RO group pattern);
   and for the PRACH occasions (ROs) unavailable for forming or do not need to form the PRACH occasion group in the association pattern period, the SSB index is not mapped on the PRACH occasion (RO) or the PRACH transmission is not performed on the PRACH occasion (RO).
36. The PRACH reception method according to any one of the supplements 21 to 34, wherein the first number of association pattern period is a smallest duration available for determining a repeated PRACH occasion group pattern (RO group pattern);
   and all valid PRACH occasions (ROs) in the first number of association pattern periods are used for the PRACH transmission.
37. The PRACH reception method according to any one of the supplements 21 to 36, wherein in the time period, for PRACH occasions (ROs) unavailable for forming a RO group that maps a third number of SSB indexes outside an integer number of PRACH occasion groups (RO groups), the SSB index is not mapped on the PRACH occasion (RO) or the PRACH transmission is not performed on the PRACH occasion (RO).
38. The PRACH reception method according to the supplement 37, wherein the PRACH transmission that is not performed on the PRACH occasion (RO) is multiple PRACH transmissions.
39. The PRACH reception method according to any one of the supplements 21 to 38, wherein,
   for all PRACH configurations with a feature or combination of features having PRACH transmission in uplink common configuration, a time period of the all PRACH configurations corresponds to the first number; or
   for one PRACH configuration with a feature or combination of features having PRACH transmission in uplink common configuration, all the combination of features corresponding to a plurality of different repetition numbers of PRACH transmissions, a time period for the PRACH transmission corresponding to all the combination of features corresponds to the first number; or,
   for one PRACH configuration with a feature or combination of features having PRACH transmission in uplink common configuration, the one combination of features corresponding to a plurality of different repetition numbers of PRACH transmissions, a time period for the PRACH transmission corresponding to the one combination of features corresponds to the first number; or,
   for one PRACH configuration with a feature or combination of features having PRACH transmission in uplink common configuration, the one feature corresponding to different repetition numbers of PRACH transmissions, a time period for the PRACH transmission corresponding to the one feature corresponds to the first number.
40. The PRACH reception method according to any one of the supplements 21 to 39, wherein the maximum value of the first number is Kmax; the maximum value of the time period is Tmax.
41. A terminal equipment including a memory storing a computer program and a processor configured to execute the computer program to implement the PRACH transmission method according to any one of the supplements 1 to 20.
42. A network device including a memory storing a computer program and a processor configured to execute the computer program to implement the PRACH reception method according to any one of the supplements 21 to 40.

## Claims

1. A PRACH transmission apparatus configured in a terminal equipment, the PRACH transmission apparatus comprising:
a processing unit configured to determine a second number of PRACH occasions related to a time period, wherein the time period is a first number of association pattern periods of synchronization signal blocks and PRACH occasions; and
a transmitting unit configured to repeatedly transmit a preamble on the second number of PRACH occasions.

2. The apparatus according to claim 1, wherein the time period is determined according to a valid PRACH occasion configured by separate configuration of PRACH occasions and/or common configuration of PRACH occasions.

3. The apparatus according to claim 2, wherein a second number N is a repetition number of a PRACH transmission, where N is an integer greater than 1;
and a feature or combination of features of PRACH transmissions with different repetition numbers corresponds to separate configurations of PRACH occasions, or a feature or combination of features of PRACH transmissions with different repetition numbers corresponds to common configuration of PRACH occasions.

4. The apparatus according to claim 1, wherein a first number K is configured and/or indicated by first information from a network device, and the first information includes radio resource control signaling and/or a MAC CE and/or downlink control information, where K is a positive integer.

5. The apparatus according to claim 4, wherein the first number configured and/or indicated by the network device is one value in a candidate value set.

6. The apparatus according to claim 5, wherein a first association pattern period corresponds to a first candidate value set, a second association pattern period corresponds to a second candidate value set, and the first association pattern period is different from the second association pattern period.

7. The apparatus according to claim 1, wherein the first number is obtained at least according to second information, and the second information is used to configure and/or indicate a repetition number of a PRACH transmission and/or the number of synchronization signal block indexes.

8. The apparatus according to claim 7, wherein one repetition number is configured for the PRACH transmission; or a plurality of repetition numbers are configured for the PRACH transmission, wherein one of the plurality of repetition numbers corresponds to one first number.

9. The apparatus according to claim 8, wherein the first number is equal to the configured repetition number, or the first number is an integer multiple of the configured repetition number, or the first number is the least common multiple of the number of the synchronization signal block indexes and the configured repetition number.

10. The apparatus according to claim 7, wherein a plurality of repetition numbers are configured for the PRACH transmission, wherein the plurality of repetition numbers correspond to one first number.

11. The apparatus according to claim 10, wherein the first number is equal to a maximum value in the configured plurality of repetition numbers, or the first number is an integer multiple of a maximum value of the configured plurality of repetition numbers, or the first number is the least common multiple of the configured plurality of repetition numbers, or the first number is the number of the configured plurality of repetition numbers, or the first number is the least common multiple of the number of the synchronization signal block indexes and the configured plurality of repetition numbers.

12. The apparatus according to claim 1, wherein the first number is a default value or a fixed value;
or the first number is a smallest value that allows the number of PRACH occasions in time domain during the time period to form at least one PRACH occasion group, or the first number is a smallest value that allows the number of PRACH occasions associated with a same synchronization signal block index in time domain during the time period is greater than or equal to a repetition number of the PRACH transmission.

13. The apparatus according to claim 1, wherein the first number is obtained according to first information and/or second information, or the first number is obtained according to first information and a default value or a fixed value, or the first number is obtained according to second information and a default value or a fixed value;
and the first information is used to configure and/or indicate the first number, and the second information is used to configure and/or indicate a repetition number of the PRACH transmission and/or the number of synchronization signal block indexes.

14. The apparatus according to claim 1, wherein the first number of association pattern periods are a smallest duration available for determining a repeated PRACH occasion group pattern;
for a PRACH occasion, in the association pattern periods, unavailable for forming or do not need to form the PRACH occasion group, a synchronization signal block index is not mapped on the PRACH occasion or PRACH transmission is not performed on the PRACH occasion,
wherein the PRACH transmission that is not performed on the PRACH occasion is multiple PRACH transmissions.

15. The apparatus according to claim 1, wherein the first number of association pattern periods are a smallest duration available for determining a repeated PRACH occasion group pattern;
and all valid PRACH occasions in the first number of association pattern periods are used for the PRACH transmission.

16. The apparatus according to claim 1, wherein in the time period, for a PRACH occasion, outside the integer number of PRACH occasion groups, unavailable for forming a PRACH occasion group that maps a third number of synchronization signal block indexes, a synchronization signal block index is not mapped on the PRACH occasion or PRACH transmission is not performed on the PRACH occasion.

17. The apparatus according to claim 1, wherein,
for all PRACH configurations with a feature or combination of features having PRACH transmission in an uplink common configuration, a time period of the all PRACH configurations corresponds to the first number; or
for one PRACH configuration with a feature or combination of features having PRACH transmission in an uplink common configuration, all the combination of features corresponding to a plurality of different repetition numbers of PRACH transmissions, a time period for the PRACH transmission corresponding to all the combination of features corresponds to the first number; or,
for one PRACH configuration with a feature or combination of features having PRACH transmission in an uplink common configuration, one combination of features corresponding to a plurality of different repetition numbers of PRACH transmissions, a time period for the PRACH transmission corresponding to the one combination of features corresponds to the first number; or,
for one PRACH configuration with a feature or combination of features having PRACH transmission in an uplink common configuration, one feature corresponding to different repetition numbers of PRACH transmissions, a time period for the PRACH transmission corresponding to the one feature corresponds to the first number.

18. The apparatus according to claim 1, wherein a maximum value of the first number is Kmax; a maximum value of the time period is Tmax.

19. A PRACH reception apparatus configured in a network device, the PRACH reception apparatus comprising:
a receiving unit configured to receive a preamble that is repeatedly transmitted by a terminal equipment on a second number of PRACH occasions,
wherein the terminal equipment determines the second number of PRACH occasions related to a time period, the time period being a first number of association pattern periods of synchronization signal blocks and PRACH occasions.

20. A communication system, comprising:
a terminal equipment configured to determine a second number of PRACH occasions related to a time period, wherein the time period is a first number of association pattern periods of synchronization signal blocks and PRACH occasions; and
a network device configured to receive a preamble that is repeatedly transmitted by the terminal equipment on the second number of PRACH occasions.
